# EUROPEAN PATENT APPLICATION

(11) **EP 4 732 984 A1**
(43) Date of publication of application: **29.04.2026**
(21) Application number: 24737292.3
(22) Date of filing: 28.04.2024
(51) Int. Cl.: B23K 26/082, B23K 26/28, B23K 26/70

(54) **WELDING METHOD FOR MULTI-LAYER TAB OF BATTERY, AND BATTERY**

(30) Priority: 20.06.2023 CN 202321583433 U; 27.06.2023 CN 202310768357
(71) Applicant: Wuxi Lead Intelligent Equipment Co., Ltd., Wuxi, Jiangsu 214028 (CN)
(72) Inventor: TAN, Yuanming, Wuxi, Jiangsu 214028 (CN); JIANG, Tiantian, Wuxi, Jiangsu 214028 (CN); ZOU, Jijia, Wuxi, Jiangsu 214028 (CN)
(74) Representative: Rau, Schneck & Hübner Patentanwälte Rechtsanwälte PartGmbB
(86) International application number: PCT/CN2024/090332
(87) International publication number: WO 2024/260106

(57) **Abstract**

Disclosed are a multi-layer tabs welding method for a battery and a battery, comprising steps: S1: conducting continuous scanning welding with laser on multi-layer tabs and a to-be-welded workpiece to form a strip-like or block-like welding bead; S2: repeating the step S1 to form a plurality of discontinuous welding beads at a connection between the multi-layer tabs and the to-be-welded workpiece. (FIG. 1)

## Description

### CROSS-REFERENCE TO RELATED APPLICATIONS

The present disclosure claims priority to a Chinese patent application No. 202310768357.3 filed with the CNIPA on June 27, 2023 and entitled "MULTI-LAYER TABS WELDING METHOD FOR BATTERY AND BATTERY", and a Chinese patent application No. 202321583433.5 filed with the CNIPA on June 20, 2023 and entitled "MULTI-LAYER TABS WELDING METHOD FOR BATTERY AND BATTERY", which are hereby incorporated by reference in their entireties.

### TECHNICAL FIELD

The present disclosure relates to a multi-layer tabs welding method for a battery and a battery.

### BACKGROUND

In the conventional art, ultrasonic welding is often used when welding multi-layer tabs to an electrical adapter. However, tabs are prone to be torn under mechanical vibration during ultrasonic welding due to their small thicknesses. In addition, due to size limitation of an ultrasonic welding head and a welding seat (oversized welding heads and welding seats are prone to be damaged), the area of the welding bead formed by welding is limited; and when the welding bead is of a small area, the current flow area is also small, which is not conducive to the development of battery fast charging technology.

In some techniques, in order to prevent the tabs from being torn under mechanical vibration, a quasi-continuous laser welder is used to weld multi-layer tabs to the electrical adapter. However, since the quasi-continuous laser welder uses pulse laser, the welding area is point-shaped and is small in diameter: even if the points are densely distributed, the area of the welding bead is still small, and the current flow area is small, which is still not conducive to the development of the battery fast charging technology.

### SUMMARY

In view of the above, it is necessary to address the above issues by providing a multi-layer tabs welding method for a battery and a battery, which can prevent tearing of the tabs and increase the area of the welding bead to improve the current flow area.

A multi-layer tabs welding method for a battery, comprising the following steps:
S1: conducting continuous scanning welding with laser on multi-layer tabs and a to-be-welded workpiece to form a strip-like or block-like welding bead;
S2: repeating the step S1 to form a plurality of discontinuous welding beads at a connection between the multi-layer tabs and the to-be-welded workpiece.

In one of embodiments, the step S1 comprises:
the welding bead is formed by laser reciprocative continuous scanning or spiral continuous scanning.

In one of embodiments, the laser reciprocative continuous scanning is:
the laser scans reciprocatively and continuously along at least one of a square waveform, a sinusoidal waveform, and a cosine waveform.

In one of embodiments,
pre-setting welding positions numbered 1 to N in sequence at the connection between the multi-layer tabs and the to-be-welded workpiece;
defining two welding beads formed at adjacent numbered welding positions as a first welding bead and a second welding bead respectively, a pre-set time interval is set between a time period during which the first welding bead is welded and a time period during which the second welding bead is welded, and the pre-set time interval is greater than or equal to the minimum time interval where there is no thermal accumulation effect between the first welding bead and the second welding bead.

In one of embodiments, comprising:
pre-setting welding positions numbered 1 to N at the connection between the multi-layer tabs and the to-be-welded workpiece;
forming the welding beads by welding at odd-numbered welding positions respectively; and
forming the welding beads by welding at even-numbered welding positions respectively; or
pre-setting welding positions numbered 1 to N at the connection between the multi-layer tabs and the to-be-welded workpiece;
forming the welding beads by welding at even-numbered welding positions respectively; and
forming the welding beads by welding at odd-numbered welding positions respectively.

In one of embodiments, the to-be-welded workpiece is an electrical adapter.

In one of embodiments, comprising:
conducting continuous scanning welding on the multi-layer tabs and the to-be-welded workpiece by a laser welding system to form the welding bead; wherein
the laser welding system comprises a laser generator and a galvanometer, and
the galvanometer is capable of deflecting the laser emitted by the laser generator to the multi-layer tabs and the to-be-welded workpiece, and is capable of moving according to a preset angle such that a scanning trajectory of the laser is a continuous line pattern.

In one of embodiments, the laser is a single-mode CW laser.

In one of embodiments, conducting continuous scanning welding with laser on the multi-layer tabs and the to-be-welded workpiece in the dedusting system to form the welding bead;
the dedusting system comprises a first dust shield and a second dust shield, and an accommodation space for accommodating the to-be-welded workpiece is formed between the first dust shield and the second dust shield; one side of the first dust shield and the second dust shield is capable of being connected to a compressed air system, the other side of the first dust shield and the second dust shield is capable of being connected to a suctioning-dedusting machine; the compressed air system is capable of blowing air into the accommodation space, the suctioning-dedusting mechanism is capable of suctioning gas in the accommodation space for dedusting.

A battery, comprising:
multi-layer tabs;
an electrical adapter being laser welded to the multi-layer tabs; there are a plurality of discontinuous strip-like or block-like welding beads at a connection between the electrical adapter and the multi-layer tabs;
wherein, each welding bead is formed by laser reciprocative continuous scanning or spiral continuous scanning.

The multi-layer tabs welding method for a battery provided by the embodiment of the present disclosure example, by using the laser continuous scanning welding method, forms strip-like or block-like welding beads on the multi-layer tabs and the to-be-welded workpiece; compared to ultrasonic laser welding, it does not produce mechanical vibration that tears the tab; at the same time, the laser continuous scanning welding may increase area of the welding beads, resulting in great welding tensile force and large residual area, and thus improves the current flow area of the battery, which is conducive to the development of the battery fast charging technology. Moreover, the laser welding is a non-contact processing, does not cause wear and tear like that by the welding seat and the welding head in the ultrasonic welding (the welding seat and the welding head in the ultrasonic welding are high-value consumables that need to be replaced and maintained after a certain times of using), and does not require frequent replacement and maintenance, thereby reducing maintenance costs. Similarly, compared to the quasi-continuous laser welding, the laser adopts line-like scanning trajectories rather than point-like trajectories, which increases the area of the welding beads, results in greater welding tensile force and residual area, and thus improves the current flow area of the battery, which is conducive to the development of the battery fast charging technology.

### BRIEF DESCRIPTION OF THE DRAWINGS

FIG. 1 is a flow chart of a multi-layer tabs welding method for a battery provided by an embodiment of the present disclosure;
FIG. 2 is a local structural diagram of a battery provided by an embodiment of the present disclosure;
FIG. 3 is a comparison diagram of a scanning trajectory of the laser of the multi-layer tabs welding method for a battery provided by an embodiment of the present disclosure and a scanning trajectory of the laser in the prior art;
FIG. 4 is the structural diagram of a dedusting system adopted by the multi-layer tabs welding method for a battery provided by the present disclosure;
FIG. 5 is a scanning trajectory of the laser diagram of the multi-layer tabs welding method for a battery provided by another embodiment of the present disclosure;
FIG. 6 is a scanning trajectory of the laser diagram of the multi-layer tabs welding method for a battery provided in another embodiment of the present disclosure.

100. multi-layer tabs; 200. electrical adapter; 300. welding bead; 400. first dust shield; 500. second dust shield; 600. suctioning-dedusting port; 700. throttle valve; 800. accommodation space.

### DETAILED DESCRIPTION

In order to make the above objects, features and advantages of the present application more clearly understood, specific embodiments of the present application will be described in detail below with reference to the accompanying drawings. In a following description, numerous specific details are set forth in order to provide a thorough understanding of the present application. However, the present application can be implemented in many other ways different from those described here, and those skilled in the art can make similar improvements without violating a connotation of the present application. Therefore, the present application is not limited by the specific embodiments disclosed below.

In the description of the present application, it should be understood that, an orientation or positional relationship indicated by terms "center", "longitudinal", "lateral", "length", "width", "thickness", "upper", "lower", "front", "back", "left", "right", "vertical", "horizontal", "top", "bottom", inner", "outer", "clockwise", "counterclockwise", "axial", "radial", "circumferential" is based on the orientation or positional relationship shown in the accompanying drawings, and is only for convenience of describing the present application and simplifying the description, rather than indicating or implying that a device or element referred to must be provided with a particular orientation, be constructed and operate in a particular orientation, and therefore should not be understood as a limitation to the present application.

In addition, terms "first" and "second" are only used for descriptive purposes and should not be understood as indicating or implying relative importance or implying a number of indicated technical features. Therefore, a feature delimited with "first", "second" may expressly or implicitly comprise at least one of those features. In a description of the present application, "a plurality" means at least two, such as two, three, etc., unless expressly and specifically defined otherwise.

In the present application, unless expressly specified and limited otherwise, terms "installed", "communicated", "connected", "fixed" and other terms should be interpreted in a broad sense, for example, it can be a fixed connection, a detachable connection, or an integrated; it can be a mechanical connection or an electrical connection; it can be directly connected, or indirectly connected through an intermediate medium, and it can be an internal communication between two elements or an interaction relationship between the two elements, unless otherwise explicitly defined. For those of ordinary skill in the art, specific meanings of the above terms in the present application can be understood according to specific situations.

In the present application, unless expressly stated and defined otherwise, a first feature "on" or "under" a second feature may be that the first feature is in direct contact with the second feature, or the first feature and the second feature are indirectly contacted through an intermediary. In addition, the first feature being "above", "over" and "on" the second feature may mean that the first feature is directly above or obliquely above the second feature, or simply means that the first feature is higher than the second feature in a horizontal direction. The first feature being "below", "under" and "below" the second feature may mean that the first feature is directly below or obliquely below the second feature, or simply means that the first feature is smaller than the second feature in a horizontal direction.

It should be noted that when an element is referred to as being "fixed to" or "arranged on" another element, it can be directly on another element, or there may be an intervening element therebetween. When an element is referred to as being "connected" to another element, it can be directly connected to another element or intervening elements may also be present. Terms "vertical", "horizontal", "upper", "lower", "left", "right" and similar expressions used here are only for illustration purposes rather than indicating the only implementation.

A multi-layer tabs welding method for a battery is provided by an embodiment of the present disclosure, comprising steps:
Step S1: conducting continuous scanning welding with laser on the multi-layer tabs 100 and the to-be-welded workpiece to form a strip-like or block-like welding bead 300.

In the preparation of batteries, the electrode sheets are stacked to form a bare cell, and the tabs of each electrode sheet will also overlap to form multi-layer tabs 100.

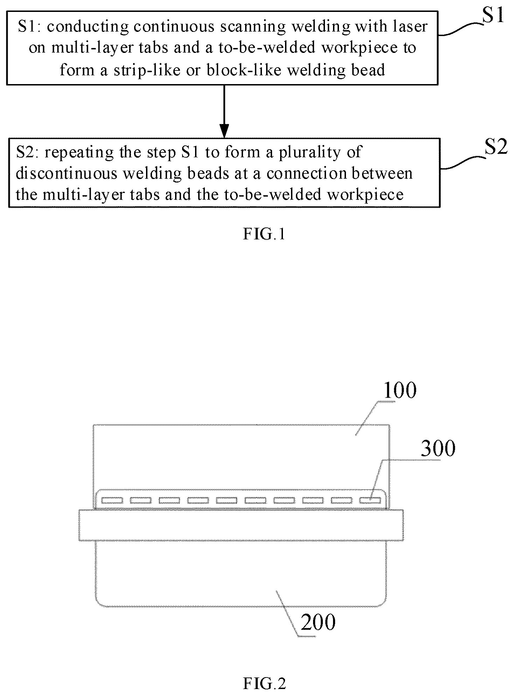

In some embodiments as shown in FIG. 2, the to-be-welded workpiece is an electrical adapter 200 (TAB sheet), which can conduct current and serve the function of outputting voltage and current, and can be connected as the cathode/ anode of the cell to other cells or electrical appliances. Of course, in other embodiments, the type of to-be-welded workpiece is not limited; for example, the to-be-welded workpiece may also be a cover plate.

The term "continuous scanning welding" means that the scanning trajectory of the laser on the multi-layer tabs 100 and the to-be-welded workpiece is a continuous line, not a single point. The welding bead 300 formed after the continuous scanning is conducted on the multi-layer tabs 100 and the to-be-welded workpiece with the laser macroscopically appears to be strip-like or block-like.

Step S2: repeating step S1 to form a plurality of discontinuous welding beads 300 at a connection between the multi-layer tabs 100 and the to-be-welded workpiece.

Generally, the multiple welding beads 300 are formed at intervals in the length direction, that is, the left-right direction in FIG. 2, of the multi-layer tabs 100.

The multi-layer tabs welding method for a battery provided by the embodiment of the present disclosure example, by using the laser continuous scanning welding method, forms strip-like or block-like welding beads 300 on the multi-layer tabs 100 and the to-be-welded workpiece; compared to ultrasonic laser welding, it does not produce mechanical vibration that tears the tab; at the same time, the laser continuous scanning welding may increase area of the welding beads, resulting in great welding tensile force and large residual area, and thus improves the current flow area of the battery, which is conducive to the development of the battery fast charging technology. Moreover, the laser welding is a non-contact processing, does not cause wear and tear like that by the welding seat and the welding head in the ultrasonic welding (the welding seat and the welding head in the ultrasonic welding are high-value consumables that need to be replaced and maintained after a certain times of using), and does not require frequent replacement and maintenance, thereby reducing maintenance costs. Similarly, compared to the quasi-continuous laser welding, the laser adopts line-like scanning trajectories rather than point-like trajectories, which increases the area of the welding beads, results in greater welding tensile force and residual area, and thus improves the current flow area of the battery, which is conducive to the development of the battery fast charging technology.

In some embodiments, a laser welding system is used to conduct continuous scanning welding on the multi-layer tabs 100 and the to-be-welded workpiece to form the strip-like or block-like welding beads 300. The laser welding system comprises a laser generator and a galvanometer, and the galvanometer may deflect the laser emitted by the laser generator to the multi-layer electrode sheets and the to-be-welded workpiece, and may move at a preset angle, such that the scanning trajectory of the laser is a continuous line shape.

The above settings, through the cooperation of the laser generator and the galvanometer, may make the scanning trajectory of the laser be the continuous line shape.

The laser generator is a single-mode CW laser, which belongs to a type of fiber laser, can be "maintenance-free" and may be used continuously for nearly 100,000 hours, therefore reducing a lot of maintenance costs. Specifically, the peak power of the laser generator used is below 2KW. When the laser is back-reflected, only a small amount of energy is returned to the laser, which is not likely to burn out the laser. Compared to the quasi-continuous lasers with a peak power higher than 4KW, the single-mode CW laser is less likely to be damaged by back reflection, and has a lower failure rate, which extends the service life and further reduces the maintenance costs.

In the welding method with the single-mode CW laser and the galvanometer, the galvanometer deflects the laser according to the graphics set by the software, and has a large scanning range (180mm * 180mm), which is much greater than the size (50mm * 6mm) of the welding head in the ultrasonic welding, far exceeds the welding size in the ultrasonic welding, and thus may be compatible with a larger area of the welding beads. The ultrasonic welding often requires two or more welding times, while using the welding method with the single-mode CW laser and the galvanometer may complete a large area welding at one time, thereby improving the welding efficiency. At the same time, compared to the quasi-continuous laser welding, the single-mode CW laser adopts line-like scanning trajectories rather than point-like scanning trajectories, which increases the area of the welding beads, and results in great welding tensile force and residual area, thereby improving the current flow area of the battery, which is conducive to the development of the fast charging for batteries.

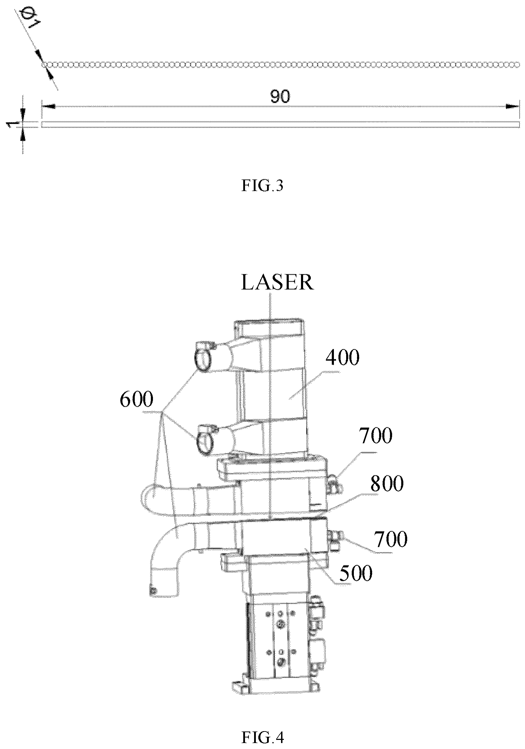

In one embodiment, as shown in FIG. 3, the scanning trajectory of single-mode CW laser welding compared to the quasi-continuous laser welding has changed from a 90-point array with a diameter of 1mm to a rectangular filling of 1mm * 90mm, and the area thereof has increased from 70.65 mm² to 90 mm², which results in an increase of 27% in the welding area, thereby improving the current flow area.

By replacing the quasi-continuous laser with the single-mode CW laser which has no duty cycle (the ratio of laser emission time to the emission period) limit, that is, the laser may be emitted continuously without interruption, while the quasi-continuous laser has a duty cycle limit of up to 50% during the welding process. As such, the single-mode CW laser may emit continuously without being limited by the duty cycle. In a preferred embodiment, the quasi-continuous laser welding of a 90-point array with a diameter of 1mm takes 5.9 seconds, while the single-mode CW laser welding of a 1mm * 90mm rectangular filling only takes 1.9 seconds, resulting in a 300% increase in efficiency.

In some embodiments, the laser is used to conduct continuous scanning welding on the multi-layer tabs 100 and the to-be-welded workpiece located in the dedusting system to form the welding bead 300. Referring to FIG. 4, the dedusting system comprises a first dust shield 400 and a second dust shield 500, between which an accommodation space 800 for accommodating the to-be-welded workpiece is formed. Specifically, the first dust shield 400 and the second dust shield 500 are distributed in a top-bottom manner. One side of the first dust shield 400 and the second dust shield 500 may be connected to a compressed air system, and the other side thereof may be connected to a suctioning-dedusting machine. The compressed air system may blow air into the accommodation space 800, and the suctioning-dedusting mechanism may suction the gas in the accommodation space 800 for dedusting. In this way, when conducting the laser welding, the to-be-welded workpiece is placed in the accommodation space 800, the compressed air system blows the compressed air into the accommodation space 800, and the suctioning-dedusting mechanism may suction the gas from the accommodation space 800 for dedusting. Specifically, the first dust shield 400 and the second dust shield 500 are both in communication with the suctioning-dedusting machine through the suctioning-dedusting port 600. Both the first dust shield 400 and the second dust shield 500 are in communication with the compressed air system through an interface provided with a throttle valve 700.

It should be noted that, except for the area for the laser to pass through, which is not sealed, the space enclosed by the first dust shield 400 and the second dust shield 500 is a sealed space to ensure the centralized discharge of welding slag. Generally, the wind speed at the accommodation space 800 may reach 25M/s, which may effectively collect the splashed welding slag.

In some embodiments, before step S1, further comprising a step of:
pre-welding the multi-layer tabs 100.

Pre-welding may substantially secure the tabs and prevent them from dispersing. In some embodiments, the ultrasonic welding machine is used for pre-welding of the multi-layer tabs 100. It is conceivable that in other embodiments, the pre-welding method for the multi-layer tabs 100 is not limited.

In some embodiments, step S1 comprises:
the welding bead 300 is formed by laser reciprocating scanning or spiral continuous scanning.

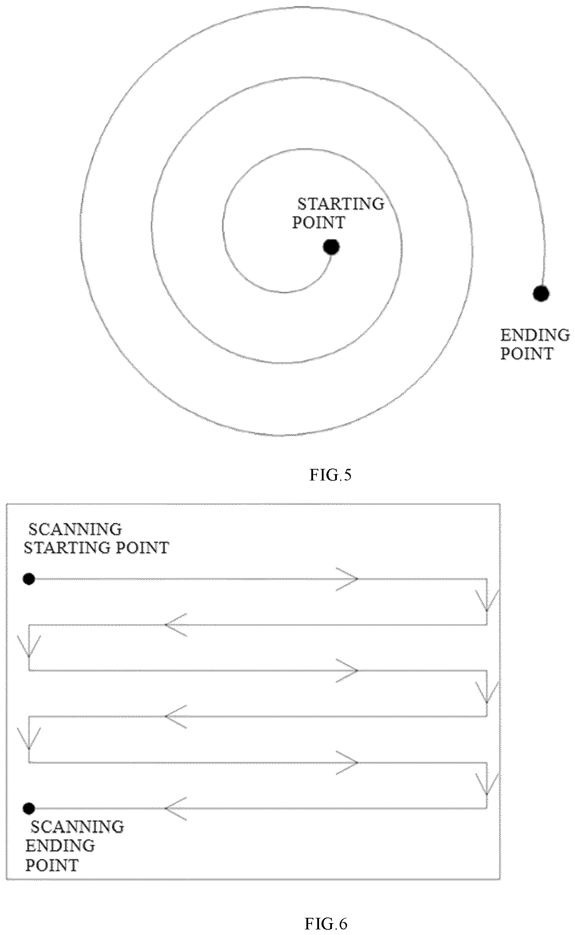

In some embodiments, the scanning trajectory of the laser is spiral (referring to FIG. 5). In some implementations, the scanning trajectory of the laser is sequential from the inside to the outside to form a spiral scanning trajectory. In other implementations, the scanning trajectory of the laser is sequential from the outside to the inside to form a spiral scanning trajectory.

It should be noted that the aforementioned spiral may be either clockwise or counterclockwise, which is not limited herein.

In other embodiments, the laser scans reciprocatively and continuously in a square wave shape, that is, the laser scans reciprocatively and continuously in a square wave pattern (referring to FIG. 6). Specifically, a scanning starting point is selected, the laser first scans in the positive direction along the length of the multi-layer tabs 100 for a first length, then turns to scan in the positive direction along the width for a second length, then turns again to scan in the reverse direction along the length for the first length, and then turns again to scan in the positive direction along the width for the second length, and so on, eventually forming a square wave-shaped scanning trajectory.

It is contemplated that in some other embodiments, there is no limitation on the scanning trajectory of the laser scanning. For example, the scanning trajectory of the laser may also be a sinusoidal waveform or a cosine waveform, and a scanning trajectory with a larger area of the welding bead is generally preferred.

Further, the multiple welding beads 300 are arranged at equal intervals in the length direction of the multi-layer tabs 100. Of course, in other embodiments, the multiple welding beads 300 may be arranged at unequal intervals in the length direction of the multi-layer tabs 100, which is not limited herein.

In some embodiments, the multi-layer tabs welding method for a battery comprises:
welding positions numbered 1 to N are pre-set in sequence at the connection between the multi-layer tabs 100 and the to-be-welded workpiece;
Two welding beads 300 formed at adjacent numbered welding positions are defined as a first welding bead and a second welding bead respectively. A pre-set time interval is set between a time period during which the first welding bead is welded and a time period during which the second welding bead is welded. The pre-set time interval is greater than or equal to the minimum time interval where there is no thermal accumulation effect between the first and second welding beads. The aforementioned minimum time interval and the pre-set time interval vary depending on the working conditions and are determined based on the working conditions. Specifically, the minimum time interval is related to the size of the welding beads 300 and the distance between the welding beads 300. Accordingly, the pre-set time interval is also related to the size of the welding beads 300 and the distance between the welding beads 300, which may be determined by a person skilled in the art on the basis of limited experimentation. For example, in a specific implementation, the length of the welding bead 300 has a length of 6mm and a width of 1.5mm, the spacing between adjacent two welding beads 300 is 2mm, the time to weld each welding bead 300 is about 0.18 second, the next welding bead 300 is welded with an interval of 0.02 second after the previous welding bead 300 is welded, and the two welding beads 300 that are (spacially) adjacent in position must not be adjacent in the time period of welding, that is, the two welding beads 300 adjacent to each other in position are welded to form at two non-adjacent time periods. It can be seen that at this time, the pre-set time interval is greater than 2 seconds.

The above settings may ensure that each welding bead 300 has enough heat dissipation time, which is convenient for heat dissipation during the welding process and avoids thermal accumulation effects.

Further, the multi-layer tabs welding method for a battery further comprises:
forming the welding beads 300 by welding at odd-numbered welding positions; and
forming the welding beads 300 by welding at even-numbered welding positions.

In one specific implementation, there are 10 pre-set welding positions at the connection between the multi-layer tabs 100 and the to-be-welded workpiece. The welding beads 300 are first formed by welding at positions 1, 3, 5, 7, and 9, and then the welding beads 300 are formed by welding at positions 2, 4, 6, 8, and 10.

In another specific implementation, the multi-layer tabs welding method for a battery further comprises:
forming the welding beads 300 by welding at even-numbered welding positions; and
forming the welding beads 300 by welding at odd-numbered welding positions.

For example, when there are 10 pre-set welding positions at the connection between the multi-layer tabs 100 and the to-be-welded workpiece, the welding beads 300 are first formed by welding at positions 2, 4, 6, 8, and 10, and then the welding beads 300 are formed by welding at positions 1, 3, 5, 7, and 9.

In other embodiments, when there are 10 pre-set welding positions at the connection between the multi-layer tabs 100 and the to-be-welded workpiece, other welding methods may also be adopted. For example, the welding beads 300 are first formed by welding at positions 1, 4, 7, and 10, then the welding beads 300 are formed by welding at positions 2, 5, and 8, and finally the welding beads 300 are formed by welding at position 3, 6, and 9. Alternatively, the welding beads 300 are first formed by welding at positions 1, 3, 7, and 9, then the welding beads 300 are formed by welding at positions 2, 4, 6, 8, and 10, and finally the welding beads 300 are formed by welding at position 5.

The above welding method, on the one hand, may ensure that there is a pre-set time interval between the time period when the first welding bead is welded and the time period when the second welding bead is welded; on the other hand, the above welding method, compared to the situation of welding the adjacent first and second welding beads in two adjacent time periods, may reduce the intermediate waiting time and thus improve the welding efficiency.

Of course, in other embodiments, a first welding bead and a first welding bead which are adjacent to each other in position can be welded in two adjacent time periods respectively, which is not limited herein.

Another embodiment of the present disclosure also provides a battery made with the above multi-layer tabs welding method for a battery, which comprises multi-layer tabs 100 and an electrical adapter 200 welded with the multi-layer tabs 100 by laser. There are a plurality of discontinuous strip-like or block-like welding beads 300 at a connection between the electrical adapter 200 and the multi-layer tabs 100. Wherein, each welding bead 300 is formed by laser reciprocative continuous scanning or spiral continuous scanning.

It should be noted that the electrical adapter 200 is a TAB piece that may conduct flow, playing the role of outputting voltage and current, and may be connected as the positive and negative poles of the cell with other cells or electrical appliances.

Regarding the battery provided by the embodiment of the present disclosure, the welding bead 300 is formed by laser reciprocative continuous scanning or spiral continuous scanning, and the laser adopts line-like scanning trajectories rather than point-like scanning trajectories, which increases the area of the welding beads, results in great welding tensile force and residual area, and thus improves the current flow area of the battery, which is conducive to the development of the fast charging for batteries.

Furthermore, the multiple welding beads 300 are arranged at equal intervals in the length direction of the multi-layer tabs 100, so as to ensure the uniformity of the welding beads 300. Of course, in other embodiments, the multiple welding beads 300 may also be arranged at unequal intervals in the length direction of the multi-layer tabs 100, which is not limited herein.

The multi-layer tabs welding method for a battery provided by embodiments of the present disclosure has the following beneficial effects:
1. The multi-layer tabs welding method for a battery uses the single-mode CW laser and the galvanometer for welding, which significantly increases the speed compared to the ultrasonic welding and the quasi-CW pulsed laser spot welding (peak 4500 W), and thus improves the welding efficiency.
2. Compared with quasi-continuous laser pulse spot welding at the same efficiency, the equipment cost of single-mode CW laser is reduced by more than 70%, while compared with ultrasonic welding (the welding seat and welding head in ultrasonic welding are consumables), single-mode CW laser is maintenance-free equipment, and the maintenance cost is much lower than that of ultrasonic welding machine.
3. Compared with the quasi-continuous laser welding, the laser adopts line-like scanning trajectories rather than point-like scanning trajectories, which increases the area of the welding bead, results in great welding tension and residual area, and thus improves the current flow area of the battery, which is conducive to the development of the fast charging for batteries.
4. By using the dedusting system, it is possible to effectively collect the welding slag and prevent the welding slag from splashing during the welding process.

The technical features of the above embodiments can be combined arbitrarily. For the sake of brevity, not all possible combinations of the individual technical features of the above embodiments are described. However, a combination of these technical features shall be considered to be within the scope of the present specification, as long as there is no contradiction in the combination.

The above embodiments are merely expressions of a few implementations of the present application described in a specific and detailed manner, and are not to be construed as limitation to the scope of the present application. It is to be noted that for a person of ordinary skill in the art, various modifications and improvements could be made without departing from the principle of the present application, and shall fall into the protection scope of the present application. Therefore, the protection scope of the present application shall be subject to the appended claims.

## Claims

1. A multi-layer tabs welding method for a battery, comprising the following steps:
S1: conducting continuous scanning welding with laser on multi-layer tabs (100) and a to-be-welded workpiece to form a strip-like or block-like welding bead (300); and
S2: repeating the step S1 to form a plurality of discontinuous welding beads (300) at a connection between the multi-layer tabs (100) and the to-be-welded workpiece.

2. The multi-layer tabs welding method for a battery according to claim 1, wherein the step S1 comprises:
the welding bead (300) is formed by laser reciprocative continuous scanning or spiral continuous scanning.

3. The multi-layer tabs welding method for a battery according to claim 2, wherein the laser reciprocative continuous scanning is:
the laser scans reciprocatively and continuously along at least one of a square waveform, a sinusoidal waveform, and a cosine waveform.

4. The multi-layer tabs welding method for a battery according to any one of claims 1 to 3, wherein
pre-setting welding positions numbered 1 to N in sequence at the connection between the multi-layer tabs (100) and the to-be-welded workpiece;
defining two welding beads (300) formed at adjacent numbered welding positions as a first welding bead and a second welding bead respectively, a pre-set time interval is set between a time period during which the first welding bead is welded and a time period during which the second welding bead is welded, and the pre-set time interval is greater than or equal to the minimum time interval where there is no thermal accumulation effect between the first welding bead and the second welding bead.

5. The multi-layer tabs welding method for a battery according to any one of claims 1 to 4, comprising:
pre-setting welding positions numbered 1 to N at the connection between the multi-layer tabs (100) and the to-be-welded workpiece;
forming the welding beads by welding at odd-numbered welding positions respectively; and
forming the welding beads by welding at even-numbered welding positions respectively; or
pre-setting welding positions numbered 1 to N at the connection between the multi-layer tabs (100) and the to-be-welded workpiece;
forming the welding beads by welding at even-numbered welding positions respectively; and
forming the welding beads by welding at odd-numbered welding positions respectively.

6. The multi-layer tabs welding method for a battery according to claim 1, wherein the to-be-welded workpiece is an electrical adapter.

7. The multi-layer tabs welding method for a battery according to any one of claims 1 to 6, comprising:
conducting continuous scanning welding on the multi-layer tabs (100) and the to-be-welded workpiece by a laser welding system to form the welding bead (300); wherein
the laser welding system comprises a laser generator and a galvanometer, and
the galvanometer is capable of deflecting the laser emitted by the laser generator to the multi-layer tabs (100) and the to-be-welded workpiece, and is capable of moving according to a preset angle such that a scanning trajectory of the laser is a continuous line pattern.

8. The multi-layer tabs welding method for a battery according to any one of claims 1 to 7, wherein the laser is a single-mode CW laser.

9. The multi-layer tabs welding method for a battery according to any one of claims 1 to 8, wherein conducting continuous scanning welding with laser on the multi-layer tabs (100) and the to-be-welded workpiece in the dedusting system to form the welding bead (300);
the dedusting system comprises a first dust shield (400) and a second dust shield (500), and an accommodation space (800) for accommodating the to-be-welded workpiece is formed between the first dust shield (400) and the second dust shield (500); one side of the first dust shield (400) and the second dust shield (500) is capable of being connected to a compressed air system, the other side of the first dust shield (400) and the second dust shield (500) is capable of being connected to a suctioning-dedusting machine; the compressed air system is capable of blowing air into the accommodation space (800), the suctioning-dedusting mechanism is capable of suctioning gas in the accommodation space (800) for dedusting.

10. A battery, comprising:
multi-layer tabs (100);
an electrical adapter (200) being laser welded to the multi-layer tabs (100); there are a plurality of discontinuous strip-like or block-like welding beads (300) at a connection between the electrical adapter (200) and the multi-layer tabs (100);
wherein, each welding bead (300) is formed by laser reciprocative continuous scanning or spiral continuous scanning.
